# EUROPEAN PATENT APPLICATION

(11) **EP 2 582 085 A1**
(43) Date of publication of application: **17.04.2013**
(21) Application number: 11184535.0
(22) Date of filing: 10.10.2011
(51) Int. Cl.: H04L 9/08, H04L 9/30

(54) **Generating implicit certificates**

(71) Applicant: Certicom Corp., Mississauga, Ontario L4W 0B5 (CA)
(72) Inventor: Poeluev, Yuri, Mississauga, Ontario L4W 0B5 (CA)
(74) Representative: Finnie, Peter John

(57) **Abstract**

Methods, systems, and computer programs for using an implicit certificate are disclosed. In some implementations, an identifier for an entity is obtained. A first cryptographic pair that includes a first private value and a first public value is generated. A second cryptographic pair that includes a second private value and a second public value is generated. Based on the first public value and the identifier for the entity, an implicit certificate *IC* is generated at a first computing device. Based on the implicit certificate *IC,* the first private value, and the second private value, a private key for the entity is generated at the first computing device. The implicit certificate *IC* is then sent with the second public value from the first computing device to the second computing device. The implicit certificate *IC* can be used, for example, to generate or verify digital signatures, to encrypt or decrypt messages, etc.

## Description

### BACKGROUND

This specification relates to using implicit certificates in a cryptographic system. Cryptographic systems enable secure communication over public channels. For example, digital signature schemes can be implemented in a public key cryptographic system. In some cryptographic systems, users verify the authenticity of other users' digital signatures based on certificates issued by a trusted third party.

### BRIEF DESCRIPTION OF THE DRAWINGS

FIG. 1 is a schematic diagram of an example data communication system.

FIG. 2 is a schematic diagram of an example cryptographic system.

FIG. 3 is a flow chart showing example technique for generating an implicit certificate and using the implicit certificate in communication.

FIG. 4 is a schematic diagram of another example data communication system.

FIG. 5 is a flow chart showing an example technique for switching between self-signed implicit certificates and CA-signed implicit certificates.

Like reference numbers and designations in the various drawings indicate like elements.

### DETAILED DESCRIPTION

An implicit certificate for an entity can be generated by the entity, for example, as opposed to being generated by a certificate authority. For instance, an entity may generate its own implicit certificate when a certificate authority is not available, when the entity is trusted by other entities who are relying on the implicit certificate, or in other circumstances. In some implementations, the entity generating its own implicit certificate is not recognized as a certificate authority but uses some of the operations that would be used by a certificate authority to generate an implicit certificate. As such, the entity can perform certain functions as a "pseudo-certificate authority" (or "pseudo-CA") for the limited purpose of creating an implicit certificate, even though the entity is not trusted or recognized as an actual certificate authority in the cryptographic system. For example, the entity can generate a pseudo-CA key pair that can be used in place of an actual certificate authority's key pair.

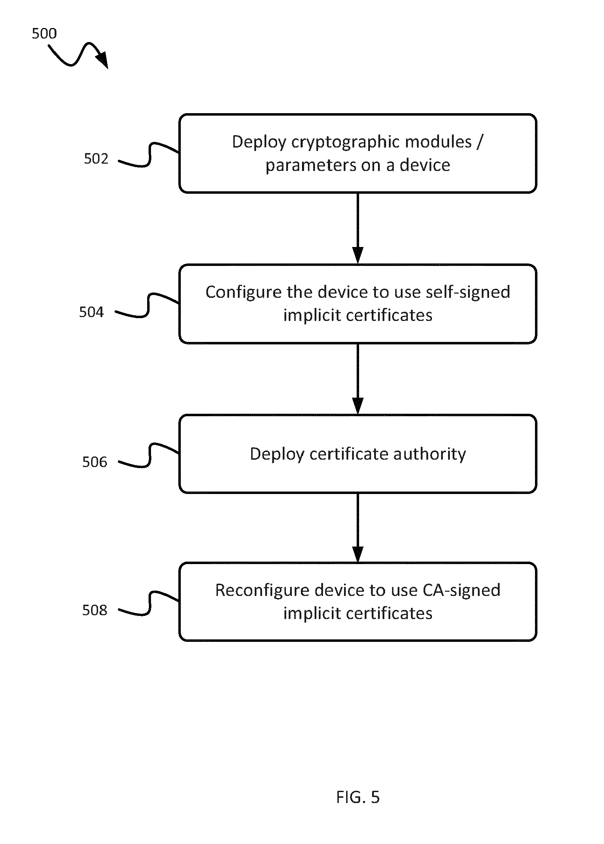

One or more advantages may be achieved when an entity generates its own implicit certificate (a "self-signed" implicit certificate) using operations that would be used by an actual certificate authority to generate an implicit certificate (a "CA-signed" implicit certificate). For example, the "self-signed" implicit certificate and the "CA-signed" implicit certificate can be used in the cryptographic system (e.g., to generate a digital signature, to verify a digital signature, etc.) based on the same cryptographic formulae. In such instances, the cryptographic system can use both "CA-signed" and "self-signed" implicit certificates, or the cryptographic system can smoothly transition between using "self-signed" and "CA-signed" implicit certificates, with little or no modification to the formulae used by the cryptographic modules. An example technique for transitioning from "self-signed" implicit certificates to "CA-signed" implicit certificates is shown in FIG 5. Additional or different techniques may be used.

In some instances, an entity generates its own implicit certificate using a pseudo-CA key pair generated locally by the entity, and other entities in the cryptographic system need the pseudo-CA public key to use the implicit certificate. The entity that generated its own implicit certificate can send the pseudo-CA public key to the other entity (*i.e.,* the relying entity) along with the implicit certificate. For example, the entity that generated its own implicit certificate can bundle the pseudo-CA public key with the implicit certificate and send the bundled information to another entity. Accordingly, the other entity can process the information to extract the implicit certificate and the associated pseudo-CA public key. The pseudo-CA public key can then be used by the other entity as if it were the public key of an actual certificate authority.

In a cryptographic system where entities generate their own implicit certificates based on pseudo-CA key pairs, a different pseudo-CA public key can be associated with each entity's implicit certificate. Accordingly, sending the pseudo-CA public key to the relying entity along with the implicit certificate can simplify data management in the cryptographic system. For example, if the pseudo-CA public key is bundled with the associated implicit certificate, the relying entity may avoid additional computational expense of calculating, searching for, or verifying the pseudo-CA public key that should be used with each particular implicit certificate.

In a cryptographic system where entities generate their own implicit certificates based on pseudo-CA key pairs, each entity may use a different pseudo-CA private key to generate its own implicit certificate. In some cases, the pseudo-CA private key is needed to generate the entity's private key. Accordingly, each entity may store its own pseudo-CA private key in a secure location and manner. For example, each entity can store its pseudo-CA private key with other private data so that it is available for use by the entity but generally inaccessible by other entities.

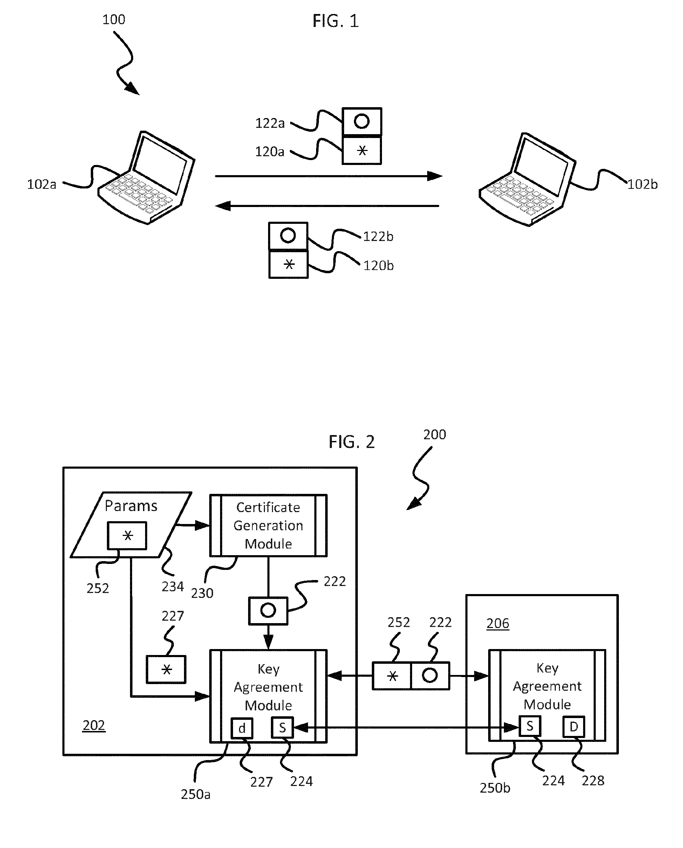

FIG. 1 is a schematic diagram of an example data communication system 100. The data communication system 100 includes a terminal 102a and another terminal 102b. The data communication system 100 can include additional, fewer, or different components. For example, the data communication system 100 may include servers, additional terminals, additional networking devices and other features not shown in the figure.

The terminals 102a, 102b can communicate with each other and with other components of a data communication system over a data network (not shown). In the example shown in FIG 1, the terminal 102a can send an implicit certificate 122a and a pseudo-CA public key 120a to the terminal 102b. Similarly, the terminal 102b can send an implicit certificate 122b and a pseudo-CA public key 120b to the terminal 102a. The terminals 102a, 102b can execute a key agreement protocol to establish a shared secret based on the implicit certificates 122a, 122b. As shown in FIG 1, each implicit certificate is sent with a corresponding pseudo-CA public key, which enables the recipient to construct the public key of the other entity. For example, the terminal 102b can use the implicit certificate 122a and the pseudo-CA public key 120a to construct the public key of the terminal 102a. Similarly, the terminal 102a can use the implicit certificate 122b and the pseudo-CA public key 120b to construct the public key of the terminal 102b.

The terminals 102a, 102b can be computing devices that can communicate over data network or communication links based on communication schemes specified by a cryptographic system. The terminals 102a, 102b are generally operable to receive, transmit, process, and store information. Although FIG. 1 shows two terminals 102a, 102b, a data communication system 100 may include any number of terminals. The data communication system 100 can include groups or subgroups of terminals that can communicate with each other. The data communication system 100 can include terminals of disparate types, having different types of hardware and software configurations, and in a variety of different locations. In some cases, multiple devices or subsystems can be identified together as a single terminal.

The terminals 102a, 102b typically include a data processing apparatus, a data storage medium, and a data communication interface. For example, the terminals 102a, 102b can include a memory, a data processor, and an input/output controller. A terminal can include user interface devices, for example, a monitor, touchscreen, mouse, or keyboard. The memory of the terminal can store messages and information associated with the cryptographic system. For example, a terminal may store the public and private key data, digital certificate data, and other types of information. The memory of the terminal can store instructions (e.g., computer code) associated with computer applications, programs and computer program modules, and other resources. For example, the terminals can store instructions associated with the computer program modules of the terminal modules 202, 206 shown in FIG. 2.

Terminals can include handheld devices such as smart phones, personal digital assistants (PDAs), portable media players, laptops, notebooks, tablets, and others. Terminals can include work stations, mainframes, non-portable computing systems, devices installed in structures, vehicles, and other types of installations. Terminals can include embedded communication devices. For example, the terminals can include messaging devices that are embedded in smart energy meters of a smart energy system. Other types of terminals may also be used.

An implicit certificate scheme implemented by the data communication system 100 allows the terminals 102a, 102b to communicate with each other in a secure manner, even when communications are observable by malicious users. Some example techniques are described here in the context of Elliptic Curve Qu-Vanstone (ECQV) implicit certificates. The techniques described here may be applied to other types of implicit certificates as well. In some implementations, a terminal 102a, 102b can generate its own "self-signed" implicit certificate.

An implicit certificate binds an entity to a particular public key value that can be used, for example, to verify digital signatures generated by the entity. For example, the terminal 102b can obtain the implicit certificate 122a to verify that a digital signature was generated by the entity associated with the terminal 102a, and not by an impostor. In this manner, the implicit certificate 122a serves as confirmation that the signed message was signed by the entity associated with the terminal 102a and not by an impostor.

An implicit certificate can include an identification for an entity. An entity can be a device (e.g., a terminal 102a or 102b), a user, or another type of entity. Instead of explicitly representing an entity's public key, an implicit certificate includes public key reconstruction data that can be combined with other information (e.g., the corresponding pseudo-CA public key, etc.) to generate the entity's public key. In some cases, successfully using an entity's implicit certificate (e.g., to verify a digital signature of the entity) serves as confirmation that the entity is in possession of the corresponding private key. Some example implicit certificates include neither an explicit representation of the public key nor an explicit representation of a certificate authority's digital signature. Thus, in some implementations, the implicit certificate is more compact than some other types of digital certificates. According to some implicit certificate schemes, binding of a user entity to its public key and the user entity's knowledge of its private key can be verified in unison during key usage.

FIG. 2 is a schematic diagram of an example cryptographic system 200 that implements an implicit certificate scheme. The cryptographic system 200 includes a terminal module 202 and a terminal module 206. The cryptographic system 200 can include additional or different components. The terminal modules 202, 206 can each be computer program modules implemented by one or more terminals. For example, either one of the terminal modules 202, 206 can be implemented by either one of the terminals 102a, 102b of FIG. 1. The terminal modules 202, 206, can be implemented by additional or different types of hardware systems. For example, terminal modules 202, 206, or in some instances individual modules, data, or other aspects of a terminal module, can be provided on a server device, such as a certificate authority server or another type of server.

The terminal modules 202, 206 can communicate with each other, for example, over a data network or another type of communication link. In the example shown in FIG. 2, the terminal module 202 includes a certificate generation module 230 and a key agreement module 250a. Similar to terminal module 202, the terminal module 206 also includes a key agreement module 250b. The terminal modules 202, 206 can include additional or different components.

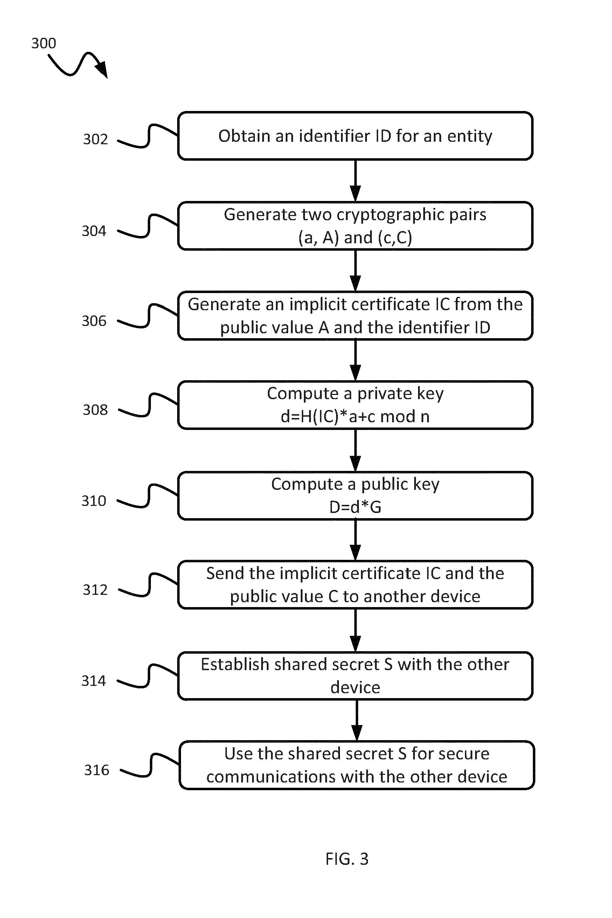

The certificate generation module 230, and possibly additional modules of the terminal module 202 can perform one or more operations for generating the implicit certificate 222 for use in the cryptographic system 200. For example, the certificate generation module 230 may be configured to perform one or more of the operations in the process 300 shown in FIG. 3, or the certificate generation module 230 may be configured to generate implicit certificates in a different manner, for example, in coordination with additional or different types of modules of the terminal module 202.

The certificate generation module 230 generates the implicit certificate 222 based on at least a portion of input parameters 234. The parameters 234 can include a cryptographic pair (*k, K),* and a pseudo-CA cryptographic pair (c, *C*)*.* The private values *k* and c can be random numbers that may be generated by a pseudorandom number generator module included in the terminal module 202. For example, one or more pseudorandom number generators described in "Special Publication 800-90: Recommendation for Random Number Generation Using Deterministic Bit Generators (Revised)," by E. Barker and J. Kelsey, published by the National Institute of Standards and Technology, dated March 2007, or other types of pseudorandom number generators can be used, as appropriate. The public values *K* and C can be made available to other terminal modules that may authenticate the terminal module 202. The certificate generation module 230 can encode the public value *K*, and possibly additional information, in an implicit certificate. The implicit certificate 222 can be generated by a certificate encoding scheme, for example, a fixed-length field scheme, a minimal ANS.1 encoding scheme, or an X.509-compliant ANS.1 encoding scheme.

The implicit certificate 222 can be used for any suitable purpose. For example, the terminal module 202 can generate a digital signature based on the implicit certificate 222 (e.g., using the private key 227 associated with the implicit certificate 222), and the terminal module 206 can verify the digital signature based on the implicit certificate 222. As another example, the terminal module 206 can generate an encrypted message based on the implicit certificate 222, and the terminal module 202 can decrypt the digital signature based on the implicit certificate 222. The implicit certificate 222 can be used for additional or different types of operations, as appropriate.

The key agreement modules 250a, 250b can execute a key agreement protocol to establish a shared secret 224 between the terminal modules 202, 206. The shared secret 224 can be used for cryptographic communication. For example, the shared secret 224 can be in connection with generating and validating digital signatures, encrypting and decrypting messages, and to perform other types of cryptographic operations. In a digital signature scheme, the shared secret can be used as additional input data, e.g., for transforming, encrypting, or hashing data before the digital signature is generated or validated. The shared secret 224 can be a value that is known to both terminal modules 202, 206 but is not publicly shared or known by other entities.

A key agreement protocol can be executed based on the public key values certified by one or more implicit certificates. Examples of key agreement protocols include Elliptic Curve Diffie Hellman (ECDH), Elliptic Curve Menezes-Qu-Vanstone (ECMQV), and others. The terminal modules 202, 206 can exchange information over a public channel during the key agreement protocol. In executing the key agreement protocol, each of the terminal modules 202, 206 derives the shared secret locally, and the shared secret can be stored locally by each terminal module 202, 206 in a secure location.

In the example shown in FIG. 2, the shared secret 224 is derived based on the implicit certificate 222 and the pseudo-CA public key 252 of the first terminal module 202. For example, the key agreement module 250b can derive the public key D of the terminal module 202 from the implicit certificate 222 and the pseudo-CA public key 252 of the terminal module 202. Additionally, the key agreement module 250a can derive the private key *d* of the terminal module 202 from the implicit certificate 222 and the pseudo-CA private key of the terminal module 202. The key agreement modules 250a, 250b can then execute a key agreement protocol based on the public key D and the corresponding private key *d* (which is available only to the key agreement module 250a).

In some instances, a key agreement protocol can establish a shared secret based on multiple implicit certificates (e.g., for terminal modules 202, 206) and their corresponding pseudo-CA public keys. For example, the second terminal module 206 may generate its own implicit certificate based on its own pseudo-CA public key, and the terminal module 206 can send its implicit certificate and pseudo-CA public key to the terminal module 202. The key agreement modules 250a, 250b can then execute the key agreement protocol based on the implicit certificate and pseudo-CA public key of the second terminal module and the implicit certificate 222 and the pseudo-CA public key 252 of the first terminal module 202. For example, the Elliptic Curve Diffie Hellman (ECDH) protocol, the Elliptic Curve Menezes-Qu-Vanstone (ECMQV) protocol, or another type of key agreement protocol may be used. To derive the shared secret 224, the second terminal module 206 can use a local private key of the second terminal module 206 and the remote public key 228 of the first terminal module 202; the first terminal module 202 can use the local private key 227 of the first terminal module 202 and a remote public key of the second terminal module 206. Additional or different inputs may be used, as appropriate.

The cryptographic system 200 utilizes an implicit certificate scheme that can be used by each of the terminal modules 202, 206, for example, to verify the authenticity of messages received from other terminal modules in the absence of CA. According to the example implicit certificate scheme, implicit certificate 222 generated by the certificate generation module 230 binds the identifier of the terminal module 202 to a particular public key value 228. The public key value 228 can be derived from the implicit certificate 222 based on the pseudo-CA public key 252. The public key value 228 corresponds to a private key value 227 that is locally accessible at the terminal module 202.

Implicit certificate schemes can be implemented based on different types of groups. For example, the ECQV implicit certificate scheme, as well as others, may be implemented using a group of points on an elliptic curve, a multiplicative group of a finite field, or other groups where the discrete logarithm problem may be hard.

Some of the example operations and capabilities of the cryptographic system 200 shown in FIG 2 are described with respect to the ECQV implicit certificate scheme. In some implementations, the ECQV implicit certificate scheme can function as a general purpose digital signature scheme for applications within computer and communications systems. Some implementations of the ECQV implicit certificate scheme are well suited for application environments where resources, such as bandwidth, computing power, and storage are limited. In those cases, ECQV implicit certificates may provide a more efficient alternative to some other types of certificates. Some implementations of the ECQV implicit certificate scheme are well suited for other types of application environments, for example, with superior resources. Examples of elliptic curve-based digital signatures schemes include ECDSA (Elliptic Curve Digital Signature Algorithm), ECPVS (Elliptic Curve Pintsov Vanstone Signatures), and ECNR (Elliptic Curve Nyberg Rueppel).

Public key cryptographic schemes based on elliptic curve cryptographic (ECC) include signature schemes, encryption schemes, key agreement schemes, and other types of schemes. In an ECC scheme, information is encoded in elliptic curve points in an elliptic curve group. An elliptic curve group can be described in terms of a solution to an equation over a finite field, for example, a prime finite field or a characteristic-two finite field. Each point in the elliptic curve group is a pair of field elements corresponding to a solution to an elliptic curve equation. The elliptic curve group also includes an identity element. As a particular example, let 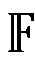 *ₚ* represent a prime finite field where p is an odd prime number, and let a, b ∈ F*ₚ* satisfy 4 * a³ + 27 * *b*² ≠ 0 (mod *p*). The elliptic curve group *E*(F*ₚ*) over F*p*, which is defined by the parameters *a*, *b* ∈ Fₚ includes the set of points P = (*x*,*y*) for *x*,*y* ∈ F*ₚ* that represent a solution to the equation y² ≡ *x*³+ *a* * *x* + *b* (mod p), together with a point *O* that is the identity element of the elliptic curve group *E*(F*ₚ*). The identity element *O* is sometimes referred to as the point at infinity.

An ECC scheme can use multiple different data types and conversion operations for converting among the data types. For example, it may be useful to communicate or store information in one data format, whereas a different data format may be more convenient or efficient for performing computations. As another example, the ECC scheme may be integrated in a broader communication scheme that uses standardized data formats, and the ECC data can be formatted for compatibility with the communication scheme. Some ECC schemes can represent the same information in several different formats. For example, an ECC scheme may specify a bit string format, an elliptic curve point format, an octet string format, an integer format, a field element format, and others. As such, the ECC scheme can specify routines for converting among the various data types and for checking the validity of each data type. In some implementations, each of the data types can be generated, validated, and converted to other data types by the terminal modules 202, 206 in the cryptographic system 200. For example, the terminal modules 202, 206 may each include one or more data conversion modules for performing conversions among the data types.

In an ECC scheme, elliptic curve domain parameters over F*ₚ*can be identified by a sextuple *T* = (*p*,*a*,*b*,*G*,*n*,*h*). The integer *p* specifies the finite field F*ₚ*. Field elements *a*, *b* ∈ F*ₚ* specify an elliptic curve *E*( 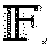 *ₚ*) over F*ₚ* as discussed above. The elliptic curve point *G* = (*x_{G},y_{G}*) on *E*( 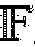 *ₚ*) is a base point generator. The integer *n* specifies the order of the base point generator *G*, having the property n*G* = *0*. The cofactor h is equal to #*E*(F*ₚ*)/*n*, which is the number of points on the elliptic curve *E*(F*ₚ*) divided by the order of the base point generator *G*. Elliptic curve domain parameters may alternatively be identified over other types of finite fields. For example, elliptic curve domain parameters over the characteristic two fields F₂m can be identified by a septuple *T* = (*m*,*f*(x),*a*,*b*,*G*,*n*,*h*), where m is an integer specifying the finite field F₂m and *f*(*x*) is an irreducible binary polynomial of degree m specifying the representation of F₂m. In some implementations, the elliptic curve domain parameters can be generated, validated, and utilized by the terminal modules 202, 206 in the cryptographic system 200. In some implementations, the elliptic curve domain parameters can be shared among the modules in the cryptographic system 200.

In an ECC scheme, an elliptic curve key pair (*k, K*) can be generated based on valid elliptic curve domain parameters, for example, *T* = (*p*, *a*, *b*, *G, n, h*) or *T* = (*m*,*f*(*x*),*a*,*b*,*G*,*n*,*h*). The key pair may be generated by selecting a random integer *k* in the interval [1,*n* - 1], computing *K* = *kG*, and outputting the key pair (*k*,*K*). The random integer *k* may be selected or obtained by a random number generator. In some implementations, the elliptic curve key pairs can be generated, validated, and processed by the terminal modules 202, 206 or by the certificate authority module 204 in the cryptographic system 200.

FIG. 3 is a flow chart showing an example process 300 for using implicit certificates. An implicit certificate can be generated by a computing device or a terminal such as the terminals 102a, 102b described with regard to FIG. 1, or the terminal modules 202, 206 described with regard to FIG. 2. The process 300 can be implemented using fewer, additional or different operations, and the operations can be performed in the order shown or in a different order. In some implementations, one or more operations or subsets of operations can be repeated or iterated, for example, until a terminating condition is reached.

In some implementations, to prepare a cryptographic system for use of implicit certificates, cryptographic primitives can be deployed. The illustrated example technique 300 is based, at least in part, on the ECC scheme. It is assumed that elliptic curve domain parameters (e.g., identified by the sextuple *T* = (*p*,*a*,*b,G*,*n*,*h*) as described with regard to FIG. 2) are agreed upon among all entities using the implicit certificate scheme. Furthermore, the entities using the implicit certificate scheme have agreed on a hash function (denoted by *H*( )).

The example technique 300 shown in FIG. 3 utilizes implicit certificates. Instead of using an implicit certificate generated by an actual certificate authority, an entity uses a pseudo-CA key pair to generate its own an implicit certificate locally. Based on this approach, in some cases the entities in the cryptographic system can use the implicit certificate based on the same computational formulae that would be used if the implicit certificate had been issued by an actual certificate authority.

At 302, an identifier for an entity is obtained. The entity can be a computing device, a user associated with a computing device, a software module on a computing device, or another type of entity. As an example, the entity can be the terminal 102a of FIG 1 or a user associated with the terminal 102a. The identifier can be a constant value denoted as *ID.* The identifier can be unique to the entity, for example, to unambiguously identify the entity within the cryptographic system. In some examples, the identifier is a random value generated by a pseudorandom number generator. In some instances, the identifier is obtained by accessing a pre-assigned identifier value from memory or from a remote device.

At 304, two cryptographic pairs *(k, K)* and (c, C) are generated. The values *k* and c are private values known by the entity, and the values *K* and C are public values that may be made public to other entities, for example, by communication over a public channel. A cryptographic pair can be any pair of associated public and private values such as, for example, a public key and its associated private key. In an elliptic curve cryptographic system, a cryptographic pair can be an integer *r* and an elliptic curve point *R* = *r * G,* where *G* is a generator point. Other types of cryptographic pairs can be used. A private value is typically stored in a secure location and manner by an entity, for example, to reduce the likelihood that an adversary will discover the private value. A public value can be communicated publicly, for example, so that other entities can use the public key for cryptographic operations.

In some cases, the private value c can be disposed (e.g., deleted) after the implicit certificate has been generated. The private value c can be used to generate a single implicit certificate and then deleted, or the private value c can be used to generate one or more additional implicit certificates. In some instance, for example in cases where the same private value c is used to generate multiple self-signed implicit certificates, the private value c can be saved. In some instances, storing the private value c reduces the computation time required to generate subsequent implicit certificates, for example, since a new private value c need not be obtained for each new implicit certificate.

Both cryptographic pairs (*k, K*) and (c, C) may be generated based on random number generation. For example, the private values *k* and c can be obtained based on the output of a pseudorandom number generator. The respective public values can be generated based on the key calculation techniques specified for the cryptographic system. For example, in an elliptic curve cryptographic system, the public values can be generated as *K* = *k * G* and *C* = *c ***** G***,** where *G* is a generator point. The cryptographic pair *(k, K)* may be used by the entity or a computing device that is coupled to the entity to compute a private key *d* and a public key D for the entity. The cryptographic pair (c, C) may be used by the entity or the computing device as pseudo-CA key pair to generate the implicit certificate.

At 306, an implicit certificate (denoted as *IC*) is generated from the public value *K* and the identifier *ID.* The generation of *IC* may be expressed *IC* = (*K*,*ID*). The implicit certificate may be generated by any suitable certificate encoding scheme based on *K* and *ID.* For example, the implicit certificate can be generated by a fixed-length field scheme, a minimal ANS.1 encoding scheme, an X.509-compliant ANS.1 encoding scheme, or any other suitable scheme.

At 308, a private key (denoted as *d*) is computed. The private key *d* may be computed by the entity or a computing device communicably coupled to the entity. The computation of the private key *d* may be expressed as *d* = *H*(*IC*) ** k* + *c* mod *n*. As described with regard to FIG. 2, *n* is an integer that specifies the order of the base point generator *G*, having the property *nG = 0*. *H*(*IC*) corresponds to a hash value computed using a hash function based on *IC.* Any suitable hash function *H*( ) may be used. Some example hash functions are described in "Federal Information Processing Standards Publication 180-2: Secure Hash Standard," published by the National Institute of Standards and Technology, dated August 2002. Another example hash function is the MMO (Matyas-Meyer-Oseas) hash function, which can be implemented based on a symmetric encryption algorithm (e.g. the advanced encryption standard (AES)). In some instances, the hash function or hashing algorithm used has a strength that matches or exceeds the strength of the elliptic curve cryptographic system.

At 310, a public key (denoted as D) is computed. The public key D may be computed by the entity or a computing device communicably coupled to the entity. The computation of the public key D may be expressed as *D = d* * *G*. After obtaining *d*, *D, IC* and *C*, the entity may store them locally for future use.

At 312, the implicit certificate *IC* and the public value C are sent to another device. Since the implicit certificate *IC* and the pseudo-CA public value C are generated by the entity instead of a CA, the entity may send *IC* and C directly to the other device. In some implementations, a communication protocol that allows sending *IC* and C to the other device may be used. After receiving *IC* and C from the entity, the other device may parse the received *IC* for the entity's public value *K* and the identifier *ID.* In some cases, the other device may then compute the public key D associated with the identifier *ID* based on a function given by *D* = *H* (*IC*) * *K* + *C*.

The implicit certificate *IC* can be used for any suitable purpose. For example the implicit certificate *IC* can be used for encryption, authentication, or other cryptographic algorithms. In some examples, an entity can generate a digital signature for a message based on the implicit certificate *IC* and/or the private key *d* and send the digital signature to another entity. The other entity can receive the digital signature and use the implicit certificate *IC* and/or the public key D to verify the digital signature.

In some instances, another implicit certificate *IC'* and a corresponding public value C' may be received from the other device. For example, the other device may send its own implicit certificate *IC'* and the corresponding public value C' to be used in a key agreement protocol. After receiving *IC'* and C' from the other device, the other entity's public key D' may be computed.

At 314, a shared secret S is established with the other device. The shared secret S may be established based on performing a key agreement protocol as described with regard to FIG. 2. The entity uses the computed private key *d* to establish the shared secret S with the other device. At 315, the shared secret S is used for secure communications with the other device. In some cases, the shared secret may be used as a symmetric key. The shared secret S can be used for encryption. For example, an entity can encrypt a message based on the shared secret S and send the encrypted message to another entity. The other entity can receive the encrypted message and use the shared secret S to decrypt the message. The shared secret S can be used for additional or different types of communication or other operations.

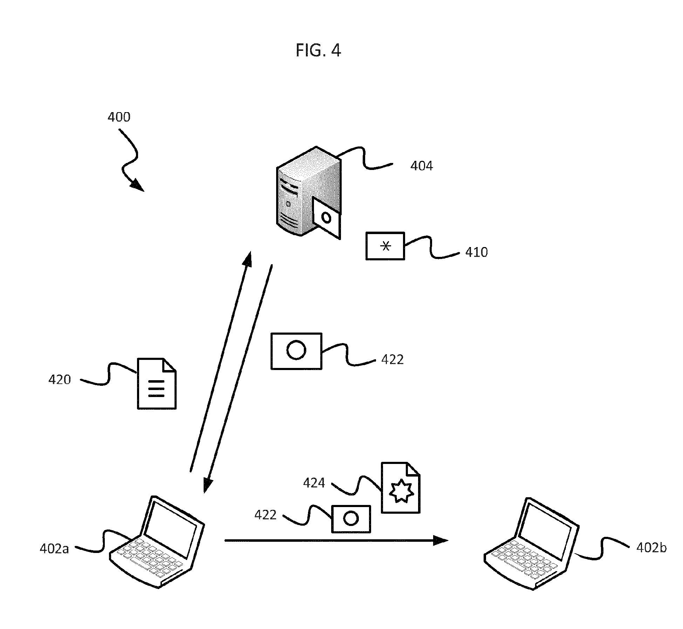

FIG. 4 is a schematic diagram of another example data communication system 400. The data communication system 400 includes a certificate authority server 404 and two terminals 402a, 402b. The data communication system 400 can include additional, fewer, or different components. The certificate authority server 404 and the terminals 402a, 402b can communicate with each other and with other components of the data communication system 400.

The communication system 400 can use CA-signed implicit certificates generated by the trusted certificate authority server 404. In the example shown in FIG. 4, the terminal 402a can send a certificate request 420 to the certificate authority server 404, and the certificate authority server 404 can respond by sending an implicit certificate 422 to the terminal 402a. The terminal 402a can send a signed message 424 to the terminal 402b, and the terminal 402b can verify the authenticity of the signed message 424 using the implicit certificate 422 from the certificate authority server 404. The data communication system 400 can support additional or different types of communication. In some implementations, the terminals 402a, 402b can also exchange encrypted messages and other types of information with each other, with the certificate authority server 404, and with other components of the data communication system 400.

The certificate authority server 404 is a computing system that can perform operations of a trusted certificate authority in a cryptographic system. The certificate authority server 404 is generally operable to receive, transmit, process, and store information associated with the cryptographic system. Although FIG. 4 shows a single certificate authority server 404, a certificate authority can be implemented using multiple certificate authority servers 404, including server clusters, as well as additional or different types of computing devices other than servers. The certificate authority server 404 has a public key 410 and a private key (not shown). The certificate authority server 404 can use its private key to generate implicit certificates. Entities (e.g., the terminals 402a, 402b) can access the certificate authority's public key 410 for use with the implicit certificates (e.g., to verify a digital signature, etc.). As such, the certificate authority's public key 410 is accessible to the terminals 402a, 402b in the communication system 400.

In one aspect of operation, the terminal 402a sends the certificate request 420 to the certificate authority server 404, and the CA server 404 generates the implicit certificate 422 for the terminal 402a. The implicit certificate 422 associates a particular public key value with a particular user entity (e.g., the terminal 402a, a user associated with the terminal 402a, a module implemented at the terminal 402a, etc.). After the implicit certificate 422 is generated, the terminal 402a receives the implicit certificate 422 from the certificate authority server 404. When the terminal 402a has a message to send to the terminal 402b, the terminal 402a generates a digital signature for the message based on the implicit certificate 422 by using the private key that corresponds to the implicit certificate 422 to generate a digital signature for the message. The digital signature is combined with the message to form the signed message 424, which the terminal 402a sends to the terminal 402b. In some implementations, the digital signature and the message are sent separately. The terminal 402b receives the signed message 424, obtains the implicit certificate 422, and verifies the digital signature based on the implicit certificate 422. The terminal 402a can send the implicit certificate 422 to the terminal 402b with the signed message 424, or the terminal 402b may obtain the implicit certificate 422 separately. Implicit certificates can also be used in other types of schemes, for example, encryption schemes.

FIG. 5 is a flow chart showing an example process 500 for deploying a cryptographic system. The example process 500 can be implemented in any suitable communication system. The process 500 can be implemented using fewer, additional or different operations, and the operations can be performed in the order shown or in a different order.

At 502, cryptographic modules or parameters are deployed on a device. The cryptographic modules may include the certificate generation module 230, the key agreement module 250 and the parameters may include the parameters 234 as described with regard to FIG. 2. At 504, the device is configured to use self-signed implicit certificates. For example, the device can be configured to generate its own implicit certificates, rather than requesting implicit certificates from a third-party certificate authority. The device may generate its implicit certificate based on a pseudo-CA key pair and send the pseudo-CA public value (e.g., the public value C described with regard to FIG. 3) along with the implicit certificate to another entity.

At 506, a certificate authority is deployed. Deploying the certificate authority may include development and deployment of the certificate authority and certificate infrastructure that can allow the certificate authority to process certificate requests, issue certificates based on certificate requests (or reject), and send issued certificates to the device. Deploying the certificate authority may include developing a certificate request generation module on the device and replacing the self-signed certificate generation scheme with a certificate request generation scheme. Deploying the certificate authority may include development of a mechanism for storing issued certificates on the device. At 508, the device is reconfigured to use CA-signed implicit certificates. The protocol may be reconfigured to enable the switch from implicit certificates to implicit certificates issued by the CA. For example, when an implicit certificate issued by an actual certificate authority can be sent without an accompanying pseudo-CA public key. In some cases, the protocol can be kept unchanged when the device is reconfigured to use CA-signed implicit certificates. For example, the certificate authority's public key can be sent along with the CA-signed implicit certificate.

Subject matter and operations described in this specification can be implemented in digital electronic circuitry, or in computer software, firmware, or hardware, including the structures disclosed in this specification and their structural equivalents, or in combinations of one or more of them. Some of the subject matter described in this specification can be implemented as one or more computer programs, i.e., one or more modules of computer program instructions, encoded on non-transitory computer storage medium for execution by, or to control the operation of, data processing apparatus. Alternatively or in addition, the program instructions can be encoded for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple cards, disks, or other storage devices).

The operations described in this specification can be implemented as operations performed by a data processing apparatus on data stored on one or more computer-readable storage devices or received from other sources. The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computing device or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computing device are a processor for performing actions in accordance with instructions and one or more memory devices for storing instructions and data. Generally, a computing device will also include, or be operatively coupled to receive data from or transfer data to, or both, one or more storage devices for storing data. However, a computing device need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, subject matter described in this specification can be implemented on a computer having a display device, e.g., an LCD (liquid crystal display) screen for displaying information to the user and a keyboard and a pointing device, e.g., touch screen, stylus, mouse, etc. by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computing device can interact with a user by sending documents to and receiving documents from a device that is used by the user; for example, by sending web pages to a web browser on a user's client device in response to requests received from the web browser.

Some of the subject matter described in this specification can be implemented in a computing system that includes a back-end component, e.g., as a data server, or that includes a middleware component, e.g., an application server, or that includes a front-end component, e.g., a client computing device having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a data network.

The computing system can include clients and servers. A client and server are generally remote from each other and typically interact through a data network. The relationship of client and server arises by virtue of computer programs running on the respective computers and having a client-server relationship to each other. In some implementations, a server transmits data to a client device. Data generated at the client device can be received from the client device at the server.

While this specification contains many specific implementation details, these should not be construed as limitations on the scope of what may be claimed, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

In a general aspect, a first computing device obtains an identifier for an entity. The first computing device generates a first cryptographic pair that includes a first private value and a first public value. The first computing device also generates a second cryptographic pair that includes a second private value and a second public value. Based on the first public value and the identifier for the entity, the first computing device generates an implicit certificate *IC* for the entity. The first computing device generates a private key for the entity based on the implicit certificate *IC,* the first private value, and the second private value. The implicit certificate *IC* is then sent with the second public value from the first computing device to a second computing device.

In some aspects, the first computing device generates the first cryptographic pair. Generating the first cryptographic pair includes obtaining the first private value by a pseudorandom number generator at the first computing device, and generating the second cryptographic pair includes obtaining the second private value by the pseudorandom number generator at the first computing device.

In some aspects, the cryptographic system includes an elliptic curve cryptographic system, the method further comprises accessing elliptic curve domain parameters that include a generator *G* of order *n*, wherein the first private value comprises a first integer value *a*, the first public value comprises a first elliptic curve point *A* = *a * G,* the second private value comprises a second integer value c, and the second public value comprises a second elliptic curve point *C* = *c * G.*

In some aspects, the first computing device generates a private key for the entity. The private key comprises an integer *d*, and generating the private key includes calculating *d = H(IC) * a* + *c* mod *n*, where *H*(*IC*) represents a hash value based on the implicit certificate *IC*. The first computing device generates a digital signature based on a message and the private key value *d*, and sends the digital signature to the second computing device.

Additionally or alternatively, implementations of these and other aspects can include one or more of the following features. The computing device can generate a public key D for the entity by computing *D* = *d* * *G.* In some aspects, the implicit certificate *IC* and the second public value enable the second computing device to generate the public key D for the entity by computing *D* = *H* (*IC*) ** A* + C.

Additionally or alternatively, implementations of these and other aspects can include one or more of the following features. The first computing device generates a shared secret value based on the public key *D* by executing a key agreement protocol with the second computing device. The first computing device also receives an encrypted message from the second computing device, and decrypts the encrypted message based on the shared secret value.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method for using an implicit certificate in cryptographic communications, the method comprising:
obtaining an identifier for an entity;
generating a first cryptographic pair that includes a first private value and a first public value;
generating a second cryptographic pair that includes a second private value and a second public value;
generating, at a first computing device, an implicit certificate *IC* for the entity based on the first public value and the identifier for the entity;
generating, at the first computing device, a private key for the entity based on the implicit certificate *IC*, the first private value, and the second private value; and
sending, from the first computing device to a second computing device, the implicit certificate *IC* with the second public value.

2. The method of claim 1, wherein generating the first cryptographic pair includes obtaining the first private value by a pseudorandom number generator at the first computing device, and generating the second cryptographic pair includes obtaining the second private value by the pseudorandom number generator at the first computing device.

3. The method of claim 1, wherein the cryptographic communications are implemented in an elliptic curve cryptographic system, the method further comprises accessing elliptic curve domain parameters that include a generator *G* of order *n*, wherein the first private value comprises a first integer value *k*, the first public value comprises a first elliptic curve point *K* = *k* * *G*, the second private value comprises a second integer value c, and the second public value comprises a second elliptic curve point *C* = *c * G.*

4. The method of claim 3, wherein the private key for the entity comprises an integer *d*, and generating the private key comprises calculating *d* = *H* (*IC*) ** k + c* mod *n*, where *H* (*IC*) represents a hash value based on the implicit certificate *IC*.

5. The method of claim 4, further comprising generating, by the first computing device, a public key D for the entity by computing *D* = *d* * *G* or by computing D = *H* (*IC*) * *K* + *C*.

6. The method of claim 5, wherein the implicit certificate *IC* and the second public value enable the second computing device to generate the public key D for the entity by computing D = *H* (*IC*) * *K* + *C*.

7. The method of claim 6, further comprising:
generating, at the first computing device, a digital signature based on a message and the implicit certificate *IC*; and
sending, from the first computing device to the second computing device, the digital signature.

8. The method of claim 6, further comprising:
generating, at the first computing device, a shared secret value based on the public key D by executing a key agreement protocol with the second computing device;
receiving, at the first computing device, an encrypted message from the second computing device; and
decrypting the encrypted message based on the shared secret value.

9. The method of claim 1, wherein sending the implicit certificate IC with the second public value comprises bundling the implicit certificate IC with the second public value and initiating transmission of the bundled implicit certificate IC and second public value.

10. A computing device comprising data processing apparatus operable to perform operations for using an implicit certificate in cryptographic communications according to the method of any of claims 1 to 9.

11. A computer-readable storing medium storing instructions that are operable when executed by data processing apparatus to perform operations for using an implicit certificate in cryptographic communications according to the method of any of claims 1 to 9.
